# FASCICULE DE BREVET EUROPEEN

(11) **EP 2 265 498 B1**
(45) Date de publication et mention de la délivrance du brevet: **31.10.2012**
(21) Numéro de dépôt: 09733760.4
(22) Date de dépôt: 12.01.2009
(51) Int. Cl.: B64D 15/12

(54) **SYSTEME DE DEGIVRAGE ET/OU D'ANTIGIVRAGE POUR BORD D'ATTAQUE DE VOILURE D'AERONEF**
ENTEISUNGS- UND/ODER ANTIVEREISUNGSSYSTEM FÜR DIE VORDERKANTE EINES FLUGZEUGFLÜGELS
DE-ICING AND/OR ANTI-ICING SYSTEM FOR THE LEADING EDGE OF AN AIRCRAFT WING

(30) Priorité: 21.04.2008 FR 0802200
(43) Date de publication de la demande: 29.12.2010
(73) Titulaire: Aircelle, 76700 Gonfreville l'Orcher (FR)
(72) Inventeur: GUILLERMOND, Alain, F-76133 Maneglise (FR); LE DOCTE, Thierry, F-76620 Le Havre (FR)
(74) Mandataire: Gaillarde, Frédéric F. Ch.
(86) Numéro de dépôt international: PCT/FR2009/000033
(87) Numéro de publication internationale: WO 2009/130400

(56) Documents cités:
- WO-A-01/08973
- DE-C1- 19 745 621
- DE-U1-202006 007 228
- FR-A- 920 828
- US-A- 2 317 019
- US-A- 2 681 409

## Description

La présente invention se rapporte à un système de dégivrage et/ou d'antigivrage pour bord d'attaque de voilure d'aéronef ou pour lèvre d'entrée d'air de moteur d'aéronef, et à un procédé de commande d'un tel système.

La formation de givre sur les bords d'attaque d'une voilure d'aéronef ou sur les lèvres d'entrées d'air des moteurs d'aéronef pose de nombreux problèmes, parmi lesquels : l'ajout de poids, le déséquilibre entre les parties babord et tribord et, dans le cas particulier des entrées d'air de moteurs, la formation de blocs de glace susceptibles de pénétrer dans le moteur et de causer des dégâts considérables.

Pour cela, de nombreux systèmes de dégivrage ou d'antigivrage ont été mis au point dans le domaine aéronautique, étant ici rappelé que le dégivrage consiste à évacuer la glace déjà formée, et que l'antigivrage consiste à prévenir toute formation de glace.

L'antigivrage est nécessaire en particulier dans le cas de moteurs comprenant des parties en matériaux composites, telles que les aubes de soufflante : dans un tel cas, il faut supprimer tout risque d'arrivée de glace dans le moteur, les matériaux composites ne pouvant résister à un tel choc.

Parmi les systèmes de dégivrage de la technique antérieure, on distingue deux catégories de systèmes : les systèmes pneumatiques et les systèmes électriques.

Dans les systèmes pneumatiques, on prélève de l'air chaud sur le moteur, et on fait circuler cet air chaud à l'intérieur du bord d'attaque ou de la lèvre d'entrée d'air à dégivrer, au moyen d'un circuit de conduites pourvues d'orifices placés de manière appropriée.

Bien qu'assez efficaces, ces systèmes pneumatiques présentent un certain nombre d'inconvénients : ils sont encombrants, pesants, et dégradent le rendement des moteurs de l'aéronef.

Dans les systèmes électriques, on alimente un réseau de résistances électriques au moyen d'un courant engendré par des organes d'alimentation électrique de l'aéronef. Ces résistances sont généralement disposées dans la peau du bord d'attaque ou de la lèvre d'entrée d'air.

Bien qu'assez efficaces, ces systèmes électriques présentent un certain nombre d'inconvénients : leur fabrication est délicate, ils sont sensibles à la foudre. Cette structure est très exposée aux impacts de toutes natures et sa réparation devient, en cas d'endommagement perforant, problématique, voire impossible.

Parmi les systèmes électriques, on connaît également du document FR 920 828 le principe consistant à utiliser des lampes à infrarouges pour chauffer l'intérieur du bord d'attaque.

Ce système antérieur présente toutefois l'inconvénient d'être lourd, encombrant, et tout à fait inadapté au dégivrage et à l'antigivrage des bords d'attaque en composites.

La présente invention a ainsi notamment pour but de fournir un système ne présentant pas les inconvénients susmentionnés, et qui soit adapté tant au dégivrage qu'à l'antigivrage notamment des bords d'attaque en composite.

On atteint ce but de l'invention avec un système de dégivrage et/ou d'antigivrage pour bord d'attaque de voilure d'aéronef ou pour lèvre d'entrée d'air de moteur d'aéronef, remarquable en ce qu'il comprend une pluralité d'émetteurs infrarouges disposés à l'intérieur dudit bord d'attaque ou de ladite lèvre, des moyens d'alimentation électrique de ces émetteurs, et des moyens de commande de ces moyens d'alimentation électrique, ces émetteurs étant en céramique et présentant en combinaison les caractéristiques suivantes :
- rapport puissance rayonnée/poids de l'ordre de 500 W pour 100 g,
- émissivité de l'ordre de 97% à 800 °C sur un spectre compris entre 1,5 µm et 10 µm,
- énergie surfacique supérieure à 70 kW par mètre carré,
- rendement supérieur à 95%.

L'utilisation de tels émetteurs infrarouges en céramique est particulièrement avantageuse : de tels émetteurs, disponibles dans le commerce, permettent de supprimer tout prélèvement d'air chaud sur les moteurs ; ils présentent un excellent rapport puissance rayonnée/poids; ils occupent peu de place et peuvent être changés facilement ; ils ont une grande durée de vie, typiquement supérieure à 10000 h ; ils ont une forte émissivité (en comparaison, un tube de quartz possède une émissivité de l'ordre de 70 %) ; ils présentent une faible inertie thermique, permettant typiquement, pour un émetteur de 1000 W, une montée en température de 700 °C en 100 secondes ; ils permettent de supprimer les problèmes de sensibilité à la foudre, du fait qu'ils peuvent être montés à l'intérieur de la cavité définie par le bord d'attaque ou par la lèvre d'entrée d'air ; ils sont particulièrement adaptés à l'antigivrage, du fait qu'ils permettent d'atteindre une énergie surfacique élevée; ils consomment peu de courant électrique, du fait de leur excellent rendement : un tel rendement est dû au fait que l'émetteur d'infrarouges utilisé est proche d'un corps noir et que les rayonnements infrarouges chauffent les matériaux qui les absorbent, mais pas l'air situé entre l'émetteur et ces matériaux.

Suivant d'autres caractéristiques optionnelles de ce système selon l'invention :
- lesdits émetteurs infrarouges comprennent des résistances chauffantes incluses dans une céramique présentant un revêtement externe spécial hautement émissif : de tels émetteurs répondent parfaitement aux besoins, et sont disponibles de manière courante sur le marché, notamment sous la marque Infraline® ;
- lesdits émetteurs infrarouges sont montés à distance de la paroi intérieure dudit bord d'attaque ou de ladite lèvre, sur des moyens de support fixés à l'intérieur de ce bord d'attaque ou de cette lèvre : cette configuration convient particulièrement lorsque le bord d'attaque ou la lèvre sont formés en matériaux composites, lesquels n'offrent pas une résistance suffisante aux températures du voisinage immédiat des émetteurs infrarouges ;
- lesdits moyens de support sont reliés à la cloison avant de ladite entrée d'air, ou à des renforts structuraux situés dans la partie avant de l'entrée d'air : cette cloison avant (qui sépare la cavité définie par la lèvre de l'entrée d'air du reste de cette entrée d'air), ou bien ces renforts structuraux (dans les cas où il n'y a pas de cloison avant), constituent des supports suffisamment rigides pour porter les émetteurs infrarouges ;
- lesdits moyens de support s'étendent entre ladite cloison avant (ou lesdits renforts structuraux) et la paroi intérieure de ladite lèvre : cette solution, dans laquelle les moyens de support sont fixés à la fois sur la cloison avant (ou sur lesdits renforts structuraux) et sur la paroi intérieure de la lèvre, permet une excellente stabilité des émetteurs infrarouges, notamment vis-à-vis des vibrations ;
- ladite lèvre d'entrée d'air comprend une paroi intérieure métallique, et lesdits émetteurs infrarouges sont fixés sur cette paroi ou à son voisinage immédiat : cette paroi intérieure métallique, présente notamment lorsque la lèvre comprend une peau incorporant une structure en nids d'abeilles métallique, est apte à résister aux températures élevées régnant dans le voisinage immédiat des émetteurs à infrarouges ;
- lesdits émetteurs infrarouges sont répartis sur une circonférence intérieure de ladite lèvre de manière à optimiser leur action : cette répartition permet un dégivrage/antigivrage homogène de toute la lèvre ;
- lesdits moyens d'alimentation électrique sont aptes à être reliés à une source électrique embarquée ou située au sol : la liaison avec une source électrique embarquée permet de mettre en oeuvre les fonctions de dégivrage/antigivrage pendant le vol, et la liaison avec une source électrique au sol permet de mettre en oeuvre ces fonctions lorsque l'aéronef est au parking, y compris lorsqu'il est complètement à l'arrêt (moteurs coupés) ;
- lesdits moyens de commande sont aptes à réguler en tension et/ou en intensité et/ou en durée lesdits moyens d'alimentation électrique, de manière à réguler l'énergie de chauffage rayonnée en direction de la paroi intérieure dudit bord d'attaque ou de ladite lèvre ;
- ledit système comprend des premiers capteurs de température disposés au voisinage de la paroi intérieure dudit bord d'attaque ou de ladite lèvre et reliés électriquement auxdits moyens de commande, et lesdits moyens de commande sont aptes à réguler en tension et/ou en intensité et/ou en durée l'alimentation électrique desdits émetteurs infrarouges en fonction des signaux reçus desdits capteurs : ces premiers capteurs de températures permettent contrôler la température de la surface insolée par les émetteurs afin de ne pas dépasser une température maximale prédéterminée ;
- ledit système comprend des deuxièmes capteurs de température disposés au voisinage immédiat desdits émetteurs infrarouges et reliés électriquement auxdits moyens de commande, et lesdits moyens de commande sont aptes à réguler en tension et/ou en intensité et/ou en durée l'alimentation électrique desdits émetteurs infrarouges en fonction des signaux reçus desdits deuxièmes capteurs : ces deuxièmes capteurs permettent de contrôler la température de surface des émetteurs infrarouges, et ainsi de maîtriser la bande de fréquence d'émission du rayonnement infrarouge ;
- lesdits émetteurs sont organisés pour être commandés soit unitairement, soit par groupes en fonction des besoins de dégivrage et de la taille de ladite entrée d'air ;
- lesdits émetteurs sont répartis de telle sorte qu'une défaillance détectée sur l'un de ceux-ci par les moyens de commande entraîne une augmentation de la puissance délivrée par les émetteurs voisins, permettant de compenser ladite défaillance ;
- un autotest intégré permet détecter une éventuelle défaillance de l'un des composants du système lors de la maintenance au sol.

La présente invention se rapporte également à un procédé de commande d'un système conforme à ce qui précède, dans lequel on interrompt le fonctionnement desdits moyens d'alimentation pendant des courtes périodes durant lesquelles on doit faire fonctionner d'autres équipements dudit aéronef, tels qu'un inverseur de poussée à actionneurs électriques : compte tenu de l'inertie thermique des pièces chauffées, ce procédé permet de disposer du maximum de puissance pour lesdits autres équipements de l'aéronef, tout en maintenant sensiblement constante la température dans les zones à dégivrer.

La présente invention se rapporte également à un procédé de commande d'un système conforme à ce qui précède, dans lequel on commande lesdits moyens d'alimentation de manière que lesdits émetteurs infrarouges émettent dans une bande de rayonnement donnée, fixée à l'avance et dépendant du matériau constitutif du bord d'attaque ou de la lèvre d'entrée d'air, de façon à optimiser le transfert de chaleur vers la surface à dégivrer.

D'autres caractéristiques et avantages de la présente invention apparaîtront à la lumière de la description qui va suivre, et à l'examen des figures ci-annexées dans lequelles :
- la figure 1 représente, en coupe schématique longitudinale, une lèvre d'entrée d'air de moteur d'aéronef, équipée d'un système selon l'invention réalisé selon un premier mode de réalisation,
- la figure 2 représente, selon une vue analogue à celle de la figure 1, une variante de ce premier mode de réalisation,
- la figure 3 représente, de manière schématique, le circuit de commande de ce premier mode de réalisation du système selon l'invention,
- les figures 4 à 6 représentent, selon les vues analogues à celles des figures 1 et 3, trois variantes d'un deuxième mode de réalisation selon l'invention,
- la figure 7 représente, selon une vue analogue à celle de la figure 3, le circuit de commande du système selon l'invention conforme à ce deuxième mode de réalisation,
- les figures 8a et 8b sont des demi-vues axiales correspondant respectivement aux modes de réalisation des figures 1 et 4, indiquant schématiquement une répartition possible des émetteurs infrarouges selon la circonférence de la lèvre d'entrée d'air,
- les figures 9a et 9b sont des vues en coupe de deux modes de réalisation possibles d'émetteurs infrarouges selon l'invention, et
- les figures 10a à 10c sont des vues à plat de trois modes de réalisation possibles d'émetteur infrarouges selon l'invention.

Dans ce qui suit, on va décrire le système selon l'invention lorsqu'il est intégré à une lèvre d'entrée d'air de moteur d'aéronef.

Il faut cependant garder à l'esprit que l'invention peut également s'appliquer à un bord d'attaque de voilure d'aéronef.

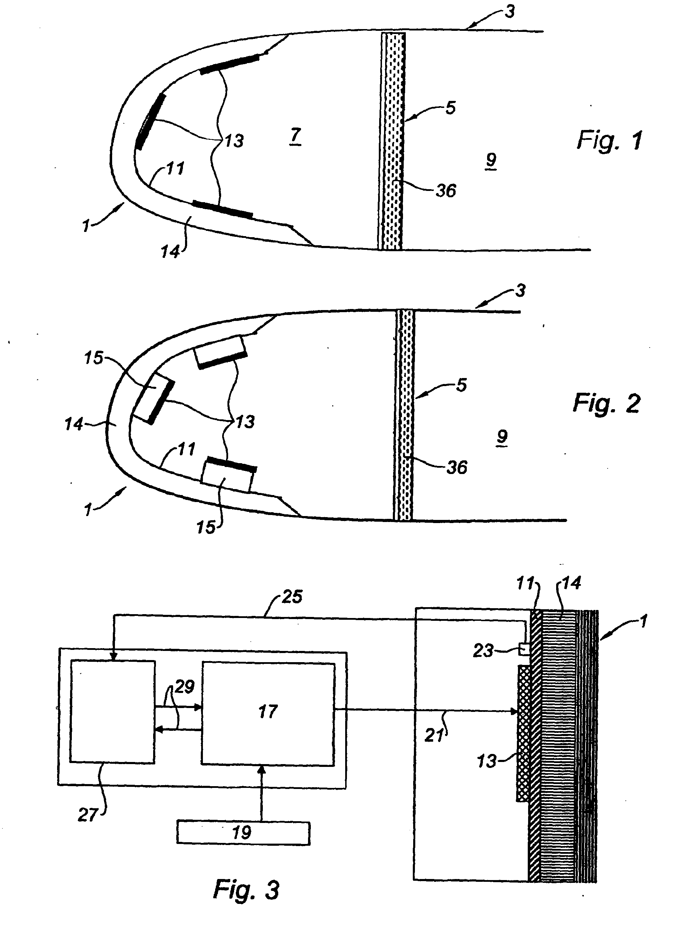

On se reporte à présent à la figure 1, sur laquelle on a représenté une lèvre 1 d'entrée d'air 3 de moteur d'aéronef.

Comme cela est connu en soit, l'entrée d'air d'un moteur d'aéronef, faisant partie de la nacelle entourant ce moteur, est une sorte de virole sensiblement annulaire permettant de capter l'air extérieur et de le diriger vers la soufflante puis vers le compresseur du moteur de l'aéronef.

La lèvre 1 de cette entrée d'air 3 en constitue en quelque sorte le bord d'attaque, c'est-à-dire le bord qui sépare le flux d'air entrant dans le moteur de celui qui s'écoule à l'extérieur de la nacelle.

Comme cela est connu en soi, l'entrée d'air 3 comprend en général une cloison 5 dite « cloison avant » séparant la cavité 7 délimitée par la lèvre 1 du reste de la zone intérieure 9 de l'entrée d'air.

Cette cloison avant 5 a d'une part une fonction structurelle, permettant d'assurer la bonne tenue de la structure de l'entrée d'air, et d'autre part une fonction d'isolation thermique de la cavité 7 par rapport à la zone 9, de façon à confiner la chaleur dans la zone à dégivrer.

Dans cette cavité 7 se trouvent en effet des moyens de dégivrage, engendrant de la chaleur qu'il importe de maintenir au contact de la paroi intérieure 11 de la lèvre 1, de manière à obtenir une efficacité de dégivrage optimale.

Plus particulièrement, dans le cadre de la présente invention, ces moyens de dégivrage comprennent une pluralité d'émetteurs infrarouges 13, fixés sur la paroi interne 11 de la lèvre 1. A noter que ce premier mode de réalisation, dans lequel ces émetteurs infrarouges 13 sont fixés directement sur cette paroi interne 11, convient bien lorsque cette paroi interne 11 présente une forte résistance à la chaleur, notamment lorsqu'elle est métallique.

C'est le cas notamment lorsque la lèvre 1 est formée d'une structure en nid d'abeille métallique 14, dans laquelle la paroi interne 11 est formée par une peau métallique.

En coupe longitudinale, les émetteurs infrarouges 13 peuvent typiquement être disposés en trois endroits distincts, comme cela est visible sur la figure 1.

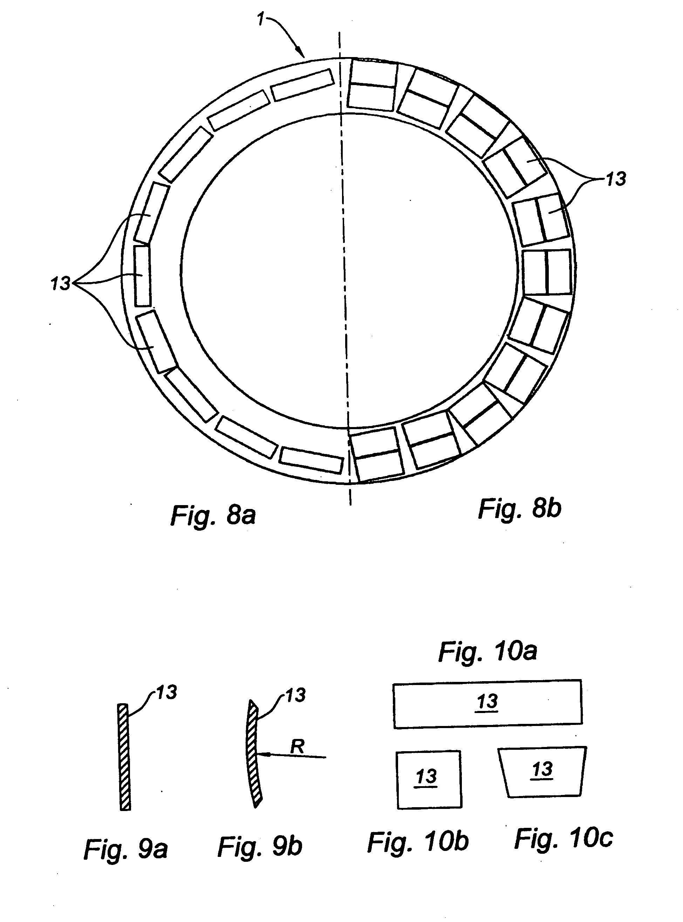

En vue axiale, ces émetteurs sont de préférence répartis de manière sensiblement régulière sur la circonférence intérieure de la lèvre 1, comme cela est visible sur la figure 8a.

Dans la variante représentée sur la figure 2, les émetteurs infragrouges 13 sont reliés à la paroi interne 11 de la lèvre 1 par l'intermédiaire de supports 15.

Les émetteurs ifnrarouges 13 peuvent être des émetteurs en céramique (résistances chauffantes noyées dans un support en céramique) alimentés par une source électrique de courant ou de tension.

De tels émetteurs sont disponibles dans le commerce notamment sous la marque INFRALINE®.

L'énergie de ce type d'émetteur infrarouges est de l'ordre de 74kW/m2, ce qui permet de disposer d'une puissance d'environ 1 kW sous 235 V pour des émetteurs de la taille de 200 mm x 64 mm.

De tels émetteurs peuvent se présenter sous une forme sensiblement rectangulaire, carrée ou trapézoïdale, comme cela est visible sur les figures 9a, 9b, 10a, 10b et 10c.

Avantageusement, et comme cela est représenté sur la figure 9b, ces émetteurs peuvent présenter un rayon de courbure R, de manière à diffuser au mieux le rayonnement infrarouge en direction de cette lèvre.

On a représenté sur la figure 3 le circuit électrique permettrant de commander les émetteurs infrarouges 13.

Ce circuit électrique comprend une alimentation électrique 17 reliée à une source électrique 19 embarquée à bord de l'aéronef, ou bien située au sol et reliée de manière déconnectable à l'alimentation électrique 17.

Un réseau de câbles 21 permet de connecter l'alimentation électrique 17 aux émetteurs infrarouges 13.

Ce réseau de câbles 21 est de préférence déconnectable de manière simple des émetteurs 13, de manière à permettre le remplacement aisé de ces derniers unitairement ou par groupe.

Le schéma représenté à la figure 3 correspond plus particulièrement à la variante de la figure 1, et les émetteurs infrarouges 13 sont ainsi fixés sur la paroi métallique intérieure de la structure en nid d'abeille 14 de la lèvre 1.

Sur la paroi métallique 11 se trouvent des capteurs de température 23. Ces capteurs de température 23 sont reliés par un câblage approprié 25 à une unité de commande électronique 27 agissant, par l'intermédiaire d'un câblage approprié 29 sur l'alimentation électrique 17.

Comme on peut le comprendre, les capteurs 23 et les moyens de câblage 25 constituent une boucle de rétroaction, permettant, grâce aux moyens de commande 27, de réguler en tension et/ou en intensité et/ou en durée (avec des périodes de coupure périodiques, par exemple) l'alimentation électrique des émetteurs infrarouges 13, donc la température de la paroi interne 11, et donc la température de dégivrage et/ou d'antigivrage de la lèvre 1.

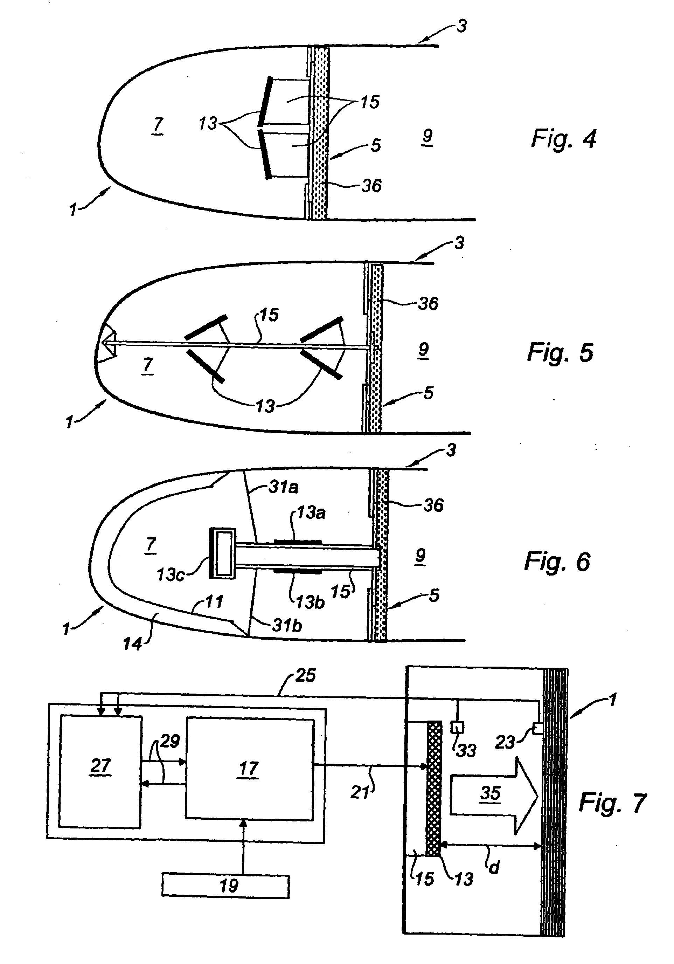

Dans le mode de réalisation représenté à la figure 4, la lèvre 1 est fabriquée en matériau composite, et ne présente pas de paroi intérieure métallique 11, comme c'était le cas dans le mode de réalisation précédent.

Dans ce cas, il n'est pas envisageable de placer les émetteurs infrarouges 13 à proximité immédiate de la paroi intérieure de la lèvre 1, faute de quoi, il y aurait un véritable risque d'endommagement de cette lèvre sous l'effet de la température très élevée dans le voisinage immédiat des émetteurs infrarouges.

Pour cette raison, il est nécessaire d'éloigner les émetteurs infrarouges de la paroi interne de la lèvre 1.

Dans la variante représentée à la figure 4, ces émetteurs 13 sont fixés sur une cloison avant 5 par l'intermédiaire de supports 15, et sont disposés par paire.

La vue axiale correspondante est la vue de la figure 8b, sur laquelle on peut voir que ces paires d'émetteurs infrarouges sont réparties régulièrement sur une circonférence intérieure de la lèvre d'entrée d'air, de manière analogue au mode de réalisation précédent.

Dans le mode de réalisation représenté à la figure 5, les émetteurs infrarouges 13 sont fixés sur un support 15 qui s'étend entre la paroi intérieure de la lèvre 1 et la cloison avant 5.

Un tel support peut consister en une structure tubulaire sur laquelle sont fixés deux fois deux paires d'émetteurs infrarouges orientés en direction de la lèvre 1, comme cela est visible sur la figure 5.

Dans ce cas, une pluralité de supports 15 et de leurs émetteurs infrarouges est répartie de manière égale sur une circonférence intérieure de la lèvre 1.

La figure 6 montre une autre variante, dans laquelle les émetteurs infrarouges 13 sont fixés sur un support 15 relié directement à la cloison avant 5, et indirectement à la lèvre 1 par l'intermédiaire de deux bras 31 a, 31 b.

Comme on peut le voir sur cette figure 6, deux émetteurs infrarouges 13a, 13b sont placés de part et d'autre du support 15, le troisième 13c étant placé à l'extrémité de ce support, face à la lèvre 1.

On notera que les variantes représentées sur les figures 4 à 6 peuvent s'appliquer également à une lèvre d'entrée d'air comprenant une structure en nid d'abeille 14, comme cela est représenté sur la figure 6.

On a représenté sur la figure 7 le circuit électrique de commande des émetteurs infrarouges des variantes des figures 4 à 6.

A la différence du mode de réalisation précédent, il y a, outre les premiers capteurs 23 disposés disposés sur la paroi intérieure de la lèvre 1, des deuxièmes capteurs 33 disposés au voisinage immédiat des émetteurs 13, ces premiers 23 et deuxièmes 33 capteurs étant reliés par un câblage approprié 25 aux moyens de commande 27.

La présence de ces deux types de capteurs permet, en utilisant des lois connues de l'homme du métier (notamment loi de Wien) de déteminer la régulation (en tension et/ou intensité et/ou durée) à appliquer à l'alimentation électrique des émetteurs 13 de manière à obtenir une bande de rayonnement infrarouge donnée (par exemple de 3,8 à 4,3 micromètres) et à ne pas dépasser une température souhaitée sur la paroi intérieure de la lèvre 1, compte tenu de la distance d séparant ces émetteurs infrarouges de cette lèvre 1 (le rayonnement infrarouge étant symbolisé par la grosse flèche 35 représentée sur la figure 7).

La distance d peut varier typiquement entre 0 et 400 mm.

Le mode de fonctionnement et les avantages du système selon l'invention résulte directement de la description qui précède.

Pour dégivrer la lèvre d'entrée d'air 1, ou pour empêcher la formation de givre sur celle-ci, on envoie un courant électrique dans les émetteurs infrarouges 13, de manière qu'ils émettent des rayonnements infrarouges en direction de la paroi intérieure de la lèvre d'entrée d'air 1.

Ces rayonnements infrarouges permettent de chauffer cette lèvre d'entrée d'air, directement (variante des figures 1 et 2) ou indirectement (variante des figures 4 à 6).

L'intensité du rayonnement infrarouge et sa bande d'émission sont contrôlées par les moyens de commande 27.

A noter qu'un rayonnement situé dans les longueurs d'ondes comprises entre 3,8 µm et 4,3 µm est particulièrement approprié au chauffage d'une lèvre d'entrée d'air en matériau composite.

On notera que le caractère modulaire des émetteurs infrarouges permet une grande souplesse d'implantation et d'orientation, permettant une optimisation de l'efficacité du dégivrage ou de l'anti-givrage.

On notera également que la régulation des émetteurs infrarouges 13 par les moyens de commande 27 peut être effectuée sur chaque émetteur de manière indépendante, ou par groupe d'émetteurs suivant la distance des émetteurs, leur nombre, leur situation dans la cavité 7 et la nature des matériaux de la lèvre à réchauffer.

On notera également que l'on peut surveiller automatiquement en service le bon fonctionnement d'un émetteur : une mesure de la tension et/ou du courant appliqué et/ou de la température de paroi de la lèvre permet de détecter la défaillance de l'un des émetteurs infrarouges. Par comparaison avec une consigne minimale de température préalablement enregistrée, on peut alors augmenter localement l'énergie électrique des émetteurs voisins de l'émetteur défaillant pour conserver une température de dégivrage adéquate.

On notera également que le système peut être doté d'un autotest intégré permettant de détecter une défaillance du fonctionnement du système de régulation et des divers groupes d'émetteurs lors de la maintenance au sol.

On notera également que, de manière avantageuse, on peut prévoir de fixer un matelas d'isolation thermique 36 sur la cloison avant 5, de manière à isoler de manière optimale la cavité 7 par rapport à la zone 9 de l'entrée d'air.

Il résulte de l'exposé qui précède que le système selon l'invention permet un dégivrage et/ou un antigivrage d'une lèvre d'entrée d'air ou d'un bord d'attaque de voilure d'aéronef présentant un faible poids, un excellent rendement, une bonne réparabilité et une parfaite protection vis-à-vis de la foudre.

Bien entendu, la présente invention n'est nullement limitée aux modes de réalisation décrits ci-dessus, fournis à titre de simples exemples.

## Revendications

1. Système de dégivrage et/ou d'antigivrage pour bord d'attaque de voilure d'aéronef ou pour lèvre (1) d'entrée d'air (3) de moteur d'aéronef, comprenant une pluralité d'émetteurs infrarouges (13, 13a, 13b) disposés à l'intérieur dudit bord d'attaque ou de ladite lèvre (1), des moyens (17) d'alimentation électrique de ces émetteurs (13, 13a, 13b), et des moyens (27) de commande de ces moyens d'alimentation électrique (17),, ces émetteurs étant en céramique et présentant en combinaison les caractéristiques suivantes :
- rapport puissance rayonnée/poids de l'ordre de 500 W pour 100 g,
- émissivité de l'ordre de 97% à 800 °C sur un spectre compris entre 1,5 µm et 10 µm,
- énergie surfacique supérieure à 70 kW par mètre carré,
- rendement supérieur à 95%.

2. Système selon la revendication 1, **caractérisé en ce que** lesdits émetteurs infrarouges (13, 13a, 13b) comprennent des résistances chauffantes incluses dans une céramique présentant un revêtement externe spécial hautement émissif.

3. Système selon l'une des revendications 1 ou 2, **caractérisé en ce que** lesdits émetteurs infrarouges (13, 13a, 13b) sont montés à distance de la paroi intérieure dudit bord d'attaque ou de ladite lèvre (1), sur des moyens de support (15) fixés à l'intérieur de ce bord d'attaque ou de cette lèvre (1).

4. Système selon la revendication 3, **caractérisé en ce que** lesdits moyens de support (15) sont reliés à la cloison avant (5) de ladite entrée d'air (3), ou à des renforts structuraux situés dans la partie avant de l'entrée d'air.

5. Système selon la revendication 4, **caractérisé en ce que** lesdits moyens de support (15) s'étendent entre ladite cloison avant (5) (ou lesdits renforts structuraux) et la paroi intérieure de ladite lèvre (1).

6. Système selon l'une des revendications 1 ou 2, **caractérisé en ce que** ladite lèvre d'entrée d'air (1) comprend une paroi intérieure métallique (11), et **en ce que** lesdits émetteurs infrarouges (13, 13a, 13b) sont fixés sur cette paroi ou à son voisinage immédiat.

7. Système selon l'une quelconque des revendications précédentes, **caractérisé en ce que** lesdits émetteurs infrarouges (13, 13a, 13b) sont répartis sur une circonférence intérieure de ladite lèvre (1) de manière à optimiser leur action.

8. Système selon l'une quelconque des revendications précédentes, **caractérisé en ce que** lesdits moyens d'alimentation électrique (17) sont aptes à être reliés à une source électrique (19) embarquée ou située au sol.

9. Système selon l'une quelconque des revendications précédentes, **caractérisé en ce que** lesdits moyens de commande (27) sont aptes à réguler en tension et/ou en courant et/ou en durée lesdits moyens d'alimentation électrique (17), de manière à réguler l'énergie de chauffage rayonnée en direction de la paroi intérieure dudit bord d'attaque ou de ladite lèvre (1).

10. Système selon l'une quelconque des revendications précédentes, **caractérisé en ce qu'**il comprend des premiers capteurs de température (23) disposés au voisinage de la paroi intérieure dudit bord d'attaque ou de ladite lèvre et reliés électriquement auxdits moyens de commande (27), et **en ce que** lesdits moyens de commande (27) sont aptes à réguler en tension et/ou en intensité et/ou en durée l'alimentation électrique desdits émetteurs infrarouges (13, 13a, 13b) en fonction des signaux reçus desdits capteurs (23).

11. Système selon l'une quelconque des revendications précédentes, **caractérisé en ce qu'**il comprend des deuxièmes capteurs de température (33) disposés au voisinage immédiat desdits émetteurs infrarouges (13, 13a, 13b) et reliés électriquement auxdits moyens de commande (27), et **en ce que** lesdits moyens de commande (27) sont aptes à réguler en tension et/ou en intensité et/ou en durée l'alimentation électrique desdits émetteurs infrarouges (13, 13a, 13b) en fonction des signaux reçus desdits deuxièmes (33) capteurs.

12. Système selon l'une quelconque des revendications précédentes, **caractérisé en ce que** lesdits émetteurs (13, 13a, 13b) sont organisés pour être commandés soit unitairement, soit par groupes en fonction des besoins de dégivrage et de la taille de ladite entrée d'air (3).

13. Système selon l'une quelconque des revendications précédentes, **caractérisé en ce que** lesdits émetteurs (13, 13a, 13b) sont répartis de telle sorte qu'une défaillance détectée sur l'un de ceux-ci par les moyens de commande (27) entraîne une augmentation de la puissance délivrée par les émetteurs voisins, permettant de compenser ladite défaillance.

14. Système selon l'une quelconque des revendications précédentes, **caractérisé en ce qu'**un autotest intégré permet détecter une éventuelle défaillance de l'un des composants du système lors de la maintenance au sol.

15. Procédé de commande d'un système conforme à l'une quelconque des revendications précédentes, dans lequel on interrompt le fonctionnement desdits moyens d'alimentation (17) pendant des courtes périodes durant lesquelles on doit faire fonctionner d'autres équipements dudit aéronef, tels qu'un inverseur de poussée à actionneurs électriques.

16. Procédé de commande d'un système conforme à l'une quelconque des revendications 1 à 14, dans lequel on commande lesdits moyens d'alimentation (17) de manière que lesdits émetteurs infrarouges (13, 13a, 13b) émettent dans une bande de rayonnement donnée, fixée à l'avance et dépendant du matériau constitutif du bord d'attaque ou de la lèvre d'entrée d'air, de façon à optimiser le transfert de chaleur vers la surface à dégivrer.

## Claims

1. A deicing and/or anti-icing system for the leading edge of an aircraft wing or for the lip (1) of the air intake (3) of the aircraft engine, comprising a plurality of infrared emitters (13, 13a, 13b) arranged inside said leading edge or said lip (1), power supply means (17) for said emitters (13, 13a, 13b), and means (27) for controlling said power supply means (17), said emitters being made from ceramic and having a combination of the following features:
- radiated power/weight ratio in the vicinity of 500 W per 100 g,
- emissivity in the vicinity of 97% at 800°C over a spectrum comprised between 1.5 µm and 10 µm,
- surface energy greater than 70 kW per square meter,
- efficiency above 95%.

2. The system according to claim 1, **characterized in that** said infrared emitters (13, 13a, 13b) comprise heating resistors included in a ceramic having a special highly emissive outer coating.

3. The system according to one of claims 1 or 2, **characterized in that** said infrared emitters (13, 13a, 13b) are mounted at a distance from the inner wall of said leading edge or said lip (1), on support means (15) fastened inside said leading edge or said lip (1).

4. The system according to claim 3, **characterized in that** said support means (15) are connected to the front partition (5) of said air intake (3), or to structural reinforcements situated in the front portion of the air intake.

5. The system according to claim 4, **characterized in that** said support means (15) extend between said front partition (5) (or said structural reinforcements) and the inner wall of said lip (1).

6. The system according to one of claims 1 or 2, **characterized in that** said air intake lip (1) comprises a metal inner wall (11), and **in that** said infrared emitters (13, 13a, 13b) are fastened on that wall or in the immediate vicinity thereof.

7. The system according to any one of the preceding claims, **characterized in that** said infrared emitters (13, 13a, 13b) are distributed over an inner circumference of said lip (1) so as to optimize their action.

8. The system according to any one of the preceding claims, **characterized in that** said power supply means (17) can be connected to a power source (19) on board or situated on the ground.

9. The system according to any one of the preceding claims, **characterized in that** said control means (27) can regulate the voltage and/or current and/or duration of said power supply means (17), so as to regulate the heat energy radiated toward the inner wall of said leading edge or said lip (1).

10. The system according to any one of the preceding claims, **characterized in that** it comprises first temperature sensors (23) arranged in the vicinity of the inner wall of said leading edge or said lip and electrically connected to said control means (27), and **in that** said control means (27) can regulate the voltage and/or intensity and/or duration of the power supply of said infrared emitters (13, 13a, 13b) as a function of the signals received from said sensors (23).

11. The system according to any one of the preceding claims, **characterized in that** it comprises second temperature sensors (33) arranged in the immediate vicinity of said infrared emitters (13, 13a, 13b) and electrically connected to said control means (27), and **in that** said control means (27) can regulate the voltage and/or intensity and/or duration of the power supply of said infrared emitters (13, 13a, 13b) as a function of the signals received from said second sensors (33).

12. The system according to any one of the preceding claims, **characterized in that** said emitters (13, 13a, 13b) are organized to be controlled either individually or in groups, depending on the deicing needs and the size of said air intake (3).

13. The system according to any one of the preceding claims, **characterized in that** said emitters (13, 13a, 13b) are distributed such that a defect detected on one of them by the control means (27) causes an increase in the power delivered by the neighboring emitters, making it possible to offset said defect.

14. The system according to any one of the preceding claims, **characterized in that** an integrated autotest makes it possible to detect any defect of one of the components of the system during ground maintenance.

15. A method for controlling a system according to any one of the preceding claims, wherein the operation of said power supply means (17) is interrupted for short periods of time during which other equipment of said aircraft is run, such as a thrust reverser with electric actuators.

16. A method for controlling a system according to any one of claims 1 to 14, wherein said power supply means (17) are controlled such that said infrared emitters (13, 13a, 13b) emit in a given radiation band, determined in advance and depending on the component material of the leading edge or the air intake lip, so as to optimize the heat transfer toward the surface to be deiced.

## Patentansprüche

1. Enteisungs- und/oder Anti-Vereisungssystem für eine Vorderkante einer Tragfläche eines Luftfahrzeugs oder für eine Lippe (1) eines Lufteinlasses (3) eines Luftfahrzeugmotors, das eine Mehrzahl von Infrarotsendern (13, 13a, 13b), die im Innern der Vorderkante oder der Lippe (1) angeordnet sind, elektrische Versorgungsmittel (17) dieser Sender (13, 13a, 13b) und Steuermittel (27) dieser elektrischen Versorgungsmittel (17) umfasst, wobei diese Sender aus Keramik sind und in Kombination die folgenden Merkmale aufweisen:
- Verhältnis Strahlungsleistung/Gewicht in der Größenordnung von 500 W für 100 g,
- Strahlungsvermögen in der Größenordnung von 97 % bei 800 °C über ein Spektrum zwischen 1,5 µm und 10 µm inklusive,
- Flächenenergie über 70 kW pro Quadratmeter,
- Leistung über 95 %.

2. System nach Anspruch 1, **dadurch gekennzeichnet, dass** die Infrarotsender (13, 13a, 13b) Heizwiderstände umfassen, die in einer Keramik eingeschlossen sind, die eine hochemissive äußere Spezialbeschichtung aufweist.

3. System nach einem der Ansprüche 1 oder 2, **dadurch gekennzeichnet, dass** die Infrarotsender (13, 13a, 13b) beabstandet von der Innenwand der Vorderkante oder der Lippe (1) auf Haltemitteln (15) montiert sind, die in dieser Vorderkante oder dieser Lippe (1) befestigt sind.

4. System nach Anspruch 3, **dadurch gekennzeichnet, dass** die Haltemittel (15) mit der vorderen Trennwand (5) des Lufteinlasses (3) oder mit Strukturverstärkungen, die sich im vorderen Abschnitt des Lufteinlasses befinden, verbunden sind.

5. System nach Anspruch 4, **dadurch gekennzeichnet, dass** sich die Haltemittel (15) zwischen der vorderen Trennwand (5) (oder den Strukturverstärkungen) und der Innenwand der Lippe (1) erstrecken.

6. System nach einem der Ansprüche 1 oder 2, **dadurch gekennzeichnet, dass** die Lufteinlasslippe (1) eine metallische Innenwand (11) umfasst und dass die Infrarotsender (13, 13a, 13b) auf dieser Wand oder in ihrer unmittelbaren Nähe befestigt sind.

7. System nach einem der vorangehenden Ansprüche, **dadurch gekennzeichnet, dass** die Infrarotsender (13, 13a, 13b) auf einem Innenumfang der Lippe (1) derart verteilt sind, dass ihre Wirkung optimiert wird.

8. System nach einem der vorangehenden Ansprüche, **dadurch gekennzeichnet, dass** die elektrischen Versorgungsmittel (17) imstande sind, mit einer eingebauten oder am Boden befindlichen Stromquelle (19) verbunden zu sein.

9. System nach einem der vorangehenden Ansprüche, **dadurch gekennzeichnet, dass** die Steuermittel (27) imstande sind, die elektrischen Versorgungsmittel (17) derart in Hinblick auf Spannung und/oder Strom und/oder Dauer zu regeln, dass die in Richtung der Innenwand der Vorderkante oder der Lippe (1) abgestrahlte Heizenergie geregelt wird.

10. System nach einem der vorangehenden Ansprüche, **dadurch gekennzeichnet, dass** es erste Temperatursensoren (23) umfasst, die in der Nähe der Innenwand der Vorderkante oder der Lippe angeordnet und elektrisch mit den Steuermitteln (27) verbunden sind und dass die Steuermittel (27) imstande sind, die elektrische Versorgung der Infrarotsender (13, 13a, 13b) im Hinblick auf Spannung und/oder Stärke und/oder Dauer in Abhängigkeit von den von den Sensoren (23) empfangenen Signalen zu regeln.

11. System nach einem der vorangehenden Ansprüche, **dadurch gekennzeichnet, dass** es zweite Temperatursensoren (33) umfasst, die in unmittelbarer Nähe der Infrarotsender (13, 13a, 13b) angeordnet und elektrisch mit den Steuermitteln (27) verbunden sind und dass die Steuermittel (27) imstande sind, die elektrische Versorgung der Infrarotsender (13, 13a, 13b) im Hinblick auf Spannung und/oder Stärke und/oder Dauer in Abhängigkeit von den von den zweiten Sensoren (33) empfangenen Signalen zu regeln.

12. System nach einem der vorangehenden Ansprüche, **dadurch gekennzeichnet, dass** die Sender (13, 13a, 13b) organisiert sind, um entweder einzeln oder in Gruppen in Abhängigkeit vom Enteisungsbedarf und der der Größe des Lufteinlasses (3) gesteuert zu werden.

13. System nach einem der vorangehenden Ansprüche, **dadurch gekennzeichnet, dass** die Sender (13, 13a, 13b) derart verteilt sind, dass eine Fehlfunktion, die bei einem von ihnen von den Steuermitteln (27) ermittelt wird, zu einer Erhöhung der von den benachbarten Sendern bereitgestellten Leistung führt, was erlaubt, die Fehlfunktion auszugleichen.

14. System nach einem der vorangehenden Ansprüche, **dadurch gekennzeichnet, dass** ein integrierter Selbsttest erlaubt, eine eventuelle Fehlfunktion eines der Bauteile des Systems bei der Wartung am Boden festzustellen.

15. Steuerverfahren eines System nach einem der vorangehenden Ansprüche, wobei der Betrieb der Versorgungsmittel (17) während kurzer Zeiträume unterbrochen wird, in denen andere Einrichtungen des Luftfahrzeugs in Betrieb genommen werden müssen, wie beispielsweise eine Schubumkehr mit elektrischen Aktuatoren.

16. Steuerverfahren eines Systems nach einem der Ansprüche 1 bis 14, wobei die Versorgungsmittel (17) derart gesteuert werden, dass die Infrarotsender (13, 13a, 13b) in einem bestimmten Strahlungsbereich senden, der vorher und in Abhängigkeit von dem Werkstoff, aus dem die Vorderkante oder die Lufteinlasslippe bestehen, festgelegt wird, um die Übertragung von Wärme auf die zu enteisende Fläche zu optimieren.
